# FASCICULE DE BREVET EUROPEEN

(11) **EP 4 114 715 B1**
(45) Date de publication et mention de la délivrance du brevet: **30.07.2025**
(21) Numéro de dépôt: 21710545.1
(22) Date de dépôt: 18.02.2021
(51) Int. Cl.: B62D 21/15, B62D 25/02, B62D 25/04

(54) **VEHICULE AVEC LIAISON INCLINEE ENTRE LE PIED AVANT ET LE LONGERON LATERAL**
FAHRZEUG MIT SCHRÄGER VERBINDUNG ZWISCHEN DER VORDEREN SCHARNIERSÄULE UND DER SEITENSCHIENE
VEHICLE WITH INCLINED CONNECTION BETWEEN THE FRONT HINGE PILLAR AND THE SIDE RAIL

(30) Priorité: 02.03.2020 FR 2002063
(43) Date de publication de la demande: 11.01.2023
(73) Titulaire: Stellantis Auto SAS, 78300 Poissy (FR)
(72) Inventeur: GAUTHIER, Damien, 78120 RAMBOUILLET (FR); LE FLOCH, Bertrand, 91140 VILLEBON SUR YVETTE (FR); MICHEL, Thierry, 78110 LE VESINET (FR)
(74) Mandataire: BCIP
(86) Numéro de dépôt international: PCT/FR2021/050292
(87) Numéro de publication internationale: WO 2021/176159

(56) Documents cités:
- WO-A1-2014/016079
- WO-A1-94/06669
- FR-A1- 2 933 059
- US-A1- 2016 194 031
- US-B1- 10 077 014

## Description

La présente invention se situe dans le domaine des véhicules automobiles, et concerne en particulier la structure de caisse des véhicules automobiles. L'invention concerne un véhicule dont la liaison entre le pied avant et le longeron latéral est configurée pour retarder la reprise d'efforts par le longeron dans le cas d'une collision latérale.

Généralement, les pieds avant et arrière d'un véhicule sont des montants situés vers l'avant ou l'arrière du côté de caisse, entre un passage de roue et une ouverture de porte. Les pieds ont des géométries différentes, spécifiques à leur lieu d'implantation à l'avant ou à l'arrière du véhicule.

Un pied avant peut être composé de plusieurs pièces de structure assemblées entre elles par soudage ou rivetage. Un pied avant peut par exemple comprendre un agencement de pièces soudées ensemble. Les différentes pièces ainsi assemblées comprennent un pied de renfort avant, un gousset supérieur de pied avant et un renfort avant côté habitacle.

Lors d'un choc frontal, les efforts en résultant sont transmis à la structure du véhicule par les longerons et par les montants de baie formant deux voies d'efforts. Une troisième voie d'effort comprend le renfort avant côté habitacle, agencé de chaque côté du véhicule au niveau du passage de roue de manière à transmettre les efforts reçus aux longerons et aux montants de baie par l'intermédiaire des goussets supérieurs de pied avant et des renforts de pied avant.

Les renforts de pied avant sont des dispositifs situés au niveau de la jonction entre le pied avant et le longeron d'un véhicule. Leur rôle est de renforcer le pied avant dans l'éventualité d'une collision frontale. Le renfort a généralement une forme coudée en « L ». Il comprend une cavité et des feuillures d'assemblage s'étendant latéralement, autour de ladite cavité. Généralement, il comprend en outre un appui-cric configuré pour maintenir en position un cric pour le levage dudit véhicule lors du changement de la roue adjacente.

Lors d'un choc frontal, la roue avant va reculer jusqu'à ce que sa jante entre en contact avec le longeron par l'intermédiaire du pied avant. En cas de choc très violent, le recul de la roue se poursuit et va déformer l'habitacle ce qui n'est pas souhaitable pour la sécurité des occupants du véhicule.

Différentes solutions ont déjà été apportées pour tenter d'améliorer la situation ainsi, par exemple, le document US103015700 et US 2016/194031 propose une structure avant de véhicule dans laquelle un élément d'absorption de chocs est disposé entre la roue et l'extrémité avant du longeron. Cette solution est intéressante car elle est adaptée aux véhicules de petite taille. Néanmoins, elle présente le désavantage de solliciter plus tôt le longeron dans la cinématique du choc, avec le risque d'une déformation anticipée de la cellule d'habitacle.

L'invention a pour objectif de proposer un véhicule permettant, lors d'un choc frontal, de retarder, et si possible d'empêcher, la déformation de l'habitacle suite à un recul d'une roue avant en cas de choc frontal.

A cet effet et selon un premier aspect, l'invention a pour objet un véhicule comprenant sur chacun de ses côtés latéraux, une roue avant munie d'une jante, un pied avant et un longeron latéral montrant une extrémité avant, le véhicule est remarquable en ce qu'au moins un pied avant est fixé à l'extrémité avant d'un longeron latéral au moyen d'une pièce intermédiaire haute montrant deux extrémités et en ce que ladite pièce intermédiaire haute est inclinée de manière à ce que son extrémité fixée au longeron latéral soit disposée inférieure à son extrémité fixée au pied avant. Le véhicule comprend en outre une traverse avant s'étendant selon la direction transversale du véhicule, le véhicule est remarquable en ce qu'il comprend en outre une pièce intermédiaire basse montrant deux extrémités et en ce qu'une de ses extrémités est fixée à l'extrémité avant du longeron latéral et une de ses extrémités est fixée à ladite traverse avant. La traverse avant est donc disposée inférieure au longeron latéral et en avant de celui-ci. La pièce intermédiaire basse est inclinée de manière à ce que son extrémité fixée au longeron latéral soit disposée supérieure à son extrémité fixée à la traverse avant.

De préférence, le pied avant comprenant un renfort de pied avant, ladite pièce intermédiaire haute est fixée au renfort de pied avant dudit pied avant, par exemple à l'extrémité inférieure du renfort de pied avant.

Comme on l'aura compris à la lecture de la définition qui vient d'en être donnée, l'invention propose de remplacer la configuration habituelle en équerre montrée par la jonction entre un pied avant et un longeron latéral par une configuration montrant une liaison entre le pied avant et le longeron latéral en biais. Ceci offre, entre autres l'avantage de permettre un recul de la roue avant plus important en cas de choc avant. En effet, la roue va d'abord entrer en contact avec la pièce intermédiaire haute qui va se déformer et absorber une partie des efforts du choc. Dans la cinématique de la collision et par rapport à un véhicule comprenant une liaison classique (i.e. en équerre) entre un pied avant et un longeron latéral, la roue entrera donc en contact avec l'extrémité avant du longeron latéral plus tard et avec moins d'efforts puisqu'une partie des efforts aura été absorbé par déformation de la pièce intermédiaire haute. Ainsi, la déformation de la cellule habitacle est retardée, voire empêchée, ce qui rend le véhicule plus performant en matière de sécurité.

Avantageusement, la pièce intermédiaire haute est oblique de manière à ce que son extrémité fixée au longeron latéral et son extrémité fixée au pied avant soient décalées l'une par rapport à l'autre selon l'axe transversal du véhicule. De préférence, la distance entre l'axe médian longitudinal du véhicule et l'extrémité de la pièce intermédiaire haute fixée au pied avant est supérieure à la distance entre l'axe médian longitudinal du véhicule et l'extrémité de la pièce intermédiaire haute fixée au longeron latéral.

Selon une mise en œuvre de l'invention, la pièce intermédiaire haute est un profilé se présentant sous la forme d'une demi-coque définissant une cavité. De préférence, la cavité de la pièce intermédiaire haute est au moins en partie bordée par des feuillures d'assemblage.

Selon des modes de réalisation de l'invention, le pied avant étant en acier, le véhicule est remarquable en ce que la pièce intermédiaire haute est venue de matière avec le pied avant ; ou en ce que la pièce intermédiaire haute est en un acier montrant une nuance différente de la nuance d'acier du pied avant.

De préférence, l'extrémité supérieure de la pièce intermédiaire haute est disposée à une hauteur supérieure ou égale à la hauteur montrée par le sommet de la jante de la roue avant par rapport au sol, ou à une hauteur comprise entre le centre et le sommet de la jante de la roue avant par rapport au sol.

Idéalement, ladite pièce intermédiaire haute est inclinée selon un angle compris entre 30° et 60° avec l'horizontale, ledit angle étant ouvert en direction de l'avant du véhicule.

Par exemple, la pièce intermédiaire haute est fixée à l'extrémité avant du longeron latéral par soudage.

De manière avantageuse, la pièce intermédiaire basse est oblique de manière à ce que son extrémité fixée au longeron latéral et son extrémité fixée à la traverse avant soient décalées l'une par rapport à l'autre selon l'axe transversal du véhicule ; de préférence, la distance entre l'axe médian longitudinal du véhicule et l'extrémité de la pièce intermédiaire basse fixée au longeron latéral est supérieure à la distance entre l'axe médian longitudinal du véhicule et l'extrémité de la pièce intermédiaire basse fixée à la traverse avant.

Par exemple, la traverse avant étant en acier ; la pièce intermédiaire basse est en un acier montrant une nuance différente de la nuance d'acier de la traverse avant.

Selon une mise en œuvre de l'invention, l'extrémité inférieure de la pièce intermédiaire basse est disposée à une hauteur inférieure ou égale à la hauteur montrée par le centre de la jante de la roue avant par rapport au sol.

Idéalement, ladite pièce intermédiaire basse est inclinée selon un angle compris entre 120° et 150° avec l'horizontale, ledit angle étant ouvert en direction de l'avant du véhicule.

Par exemple, la pièce intermédiaire basse est fixée à l'extrémité avant du longeron latéral par soudage.

De manière préférentielle, la pièce intermédiaire basse est un profilé se présentant sous la forme d'une demi-coque définissant une cavité ; de préférence, la cavité de la pièce intermédiaire est au moins en partie bordée par des feuillures d'assemblage.

Selon un mode de réalisation de l'invention, une extrémité de la pièce intermédiaire haute, une extrémité de la pièce intermédiaire basse et l'extrémité avant du longeron latéral se superposent au niveau de leur zone de fixation. De préférence, l'extrémité de la pièce intermédiaire haute et/ou de la pièce intermédiaire basse superposée à l'extrémité du longeron latéral est dépourvue de feuillures d'assemblage.

L'invention sera bien décrite et d'autres aspects et avantages apparaîtront clairement à la lecture de la description qui suit donnée en référence à la figure unique annexée sur laquelle :

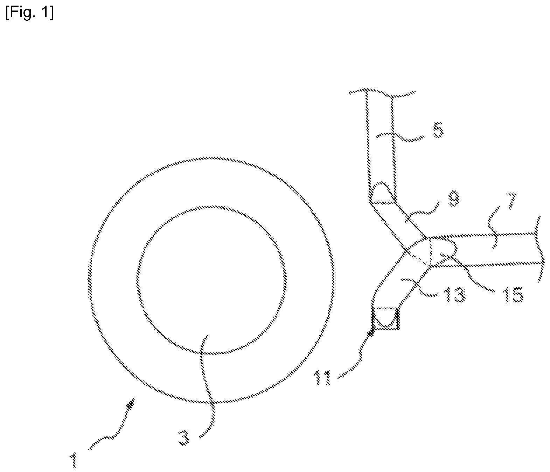

[Fig.1] La figure 1 est une vue schématique de la partie avant d'une structure de véhicule selon l'invention, le véhicule étant vu depuis un de ses côtés latéraux.

Dans la description qui suit, le terme « comprendre » est synonyme de « inclure » et n'est pas limitatif en ce qu'il autorise la présence d'autres éléments ou formes dans le joint d'étanchéité ou le véhicule auquel il se rapporte. Il est entendu que le terme « comprendre » inclut les termes « consister en ». De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ». Les termes « longitudinal », transversal », « avant » et « arrière » s'entendront par rapport à l'orientation générale du véhicule tel que pris selon son sens normal de marche. L'unité de mesure MPa correspond à « Méga Pascals ».

La description qui suit est donnée en référence à la figure 1 qui représente schématiquement un des côtés d'un véhicule comprenant des roues avant 1 munies de jantes 3, des pieds avant 5 et des longerons latéraux 7 montrant une extrémité avant. Un seul côté est montré sur la figure 1, l'invention peut s'appliquer à un seul côté du véhicule ; elle s'applique préférentiellement aux deux côtés du véhicule. Ainsi selon l'invention, au moins un pied avant 5 est fixé à l'extrémité avant d'un longeron latéral 7 au moyen d'une pièce intermédiaire haute 9 montrant deux extrémités. La pièce intermédiaire haute 9 est inclinée de manière à ce que son extrémité fixée au longeron latéral 7 soit disposée inférieure à son extrémité fixée au pied avant 5. Cette configuration permet un recul de la roue qui est plus important que dans le cas d'une configuration classique en équerre dans lequel le pied avant est fixé par angle droit à l'extrémité avant du longeron latéral.

La pièce intermédiaire haute 9 peut être une pièce ajoutée, une extension du pied avant 5 ou une extension du longeron latéral 7.

Dans le cas (non représenté) où la pièce intermédiaire haute est une extension du pied avant, on comprendra que le pied avant et la pièce intermédiaire haute ne font qu'un. La pièce intermédiaire haute est donc venue de matière avec ledit pied avant, montre la même épaisseur et est réalisée dans la même nuance d'acier que le pied avant.

Dans le cas (non représenté) où la pièce intermédiaire haute est une extension du longeron latéral, on comprendra que le longeron latéral et la pièce intermédiaire haute ne font qu'un. La pièce intermédiaire haute est donc venue de matière avec ledit longeron latéral, montre la même épaisseur et est réalisée dans la même nuance d'acier que le longeron latéral.

Dans le cas (représenté en figure 1) où la pièce intermédiaire haute 9 est une pièce ajoutée, celle-ci peut être réalisée dans le même acier ou dans une nuance d'acier différente de l'acier dont est constitué le longeron latéral 7 ou le pied avant 5. Par exemple, la pièce intermédiaire haute 9 peut être réalisée en acier à ultra haute limite élastique présentant, après emboutissage à chaud, une résistance mécanique Rm d'au moins 1200 MPa telle que mesurée selon la norme ISO 6892-1:2016 et un allongement à la rupture d'au moins 3 % telle que mesurée selon la norme ISO 6892-1:2016. Des aciers présentant de telles caractéristiques sont disponibles sur le marché, par exemple commercialisés par ArcelorMittal sous le nom commercial Usibor^{©} 1500 ou 22MnB5, ces nuances d'acier présentent en effet, après une opération d'emboutissage à chaud une limite élastique Re de 1100 MPa, une résistance mécanique Rm de 1500 MPa et un allongement à la rupture A ≥ 6 %. Dans un autre exemple, elle est réalisée dans un acier présentant une résistance mécanique Rm comprise entre 300 et 1150 MPa, la résistance mécanique étant mesurée selon la norme ISO 6892-1:2016. La pièce intermédiaire haute 9 peut être réalisée dans une tôle montrant la même épaisseur que la tôle dont est fait le pied avant 5 ou le longeron latéral 7. Selon un mode de réalisation, elle est réalisée dans une tôle montrant une épaisseur supérieure à la l'épaisseur de la tôle dont est formée le pied avant 5 ; par exemple, au moins 1,1 fois son épaisseur, ou encore au moins 1,5 fois son épaisseur.

De manière optionnelle, la présence de la pièce intermédiaire haute 9 permet également de produire des véhicules dans lesquels le pied avant 5 et le longeron latéral 7 ne sont pas alignés selon la direction transversale du véhicule. Par exemple, la pièce intermédiaire haute 9 est oblique de manière à ce que son extrémité fixée au longeron latéral 7 et son extrémité fixée au pied avant 5 soient décalées l'une par rapport à l'autre selon l'axe transversal du véhicule. De préférence, la distance entre l'axe médian longitudinal du véhicule et l'extrémité de la pièce intermédiaire haute 9 fixée au pied avant 5 est supérieure à la distance entre l'axe médian longitudinal du véhicule et l'extrémité de la pièce intermédiaire haute 9 fixée au longeron latéral 7. L'inverse est également possible, c'est-à-dire que la distance entre l'axe médian longitudinal du véhicule et l'extrémité de la pièce intermédiaire haute 9 fixée au pied avant 5 est inférieure à la distance entre l'axe médian longitudinal du véhicule et l'extrémité de la pièce intermédiaire haute 9 fixée au longeron latéral 7. L'homme de métier pourra néanmoins envisager une structure plus classique dans laquelle le pied avant 5 et le longeron latéral 7 sont alignés selon l'axe longitudinal du véhicule de sorte à ce que la distance entre l'axe médian longitudinal du véhicule et l'extrémité de la pièce intermédiaire haute 9 fixée au pied avant 5 est égale à la distance entre l'axe médian longitudinal du véhicule et l'extrémité de la pièce intermédiaire haute 9 fixée au longeron latéral 7.

La pièce intermédiaire haute 9 est avantageusement un profilé, par exemple un embouti. Selon une mise en œuvre de l'invention, la pièce intermédiaire haute 9 est un profilé se présentant sous la forme d'une demi-coque définissant une cavité, la cavité montrant un fond et des parois latérales. De préférence, la cavité de la pièce intermédiaire haute 9 est au moins en partie bordée par des feuillures d'assemblage. Lorsqu'elle n'en constitue pas une extension, la pièce intermédiaire haute 9 est fixée au pied avant 5 et/ou à l'extrémité avant du longeron latéral 7 par tout moyen, comme par exemple par rivetage ou par soudage, tel que par soudage par résistance électrique par points. Le soudage peut se faire au niveau des feuillures d'assemblage et/ou au niveau de sa cavité. Ainsi, la pièce intermédiaire haute 9 est fixée au longeron latéral 7 et/ou au pied avant 5 par une pluralité de points de soudure reliant le fond de sa cavité au fond de la cavité du longeron latéral 7 et/ou du pied avant 5, et/ou au moins une paroi latérale de sa cavité à au moins une paroi latérale de la cavité du longeron latéral 7 et/ou du pied avant 5.

Concernant l'inclinaison montrée par la pièce intermédiaire haute 9, l'homme du métier aura avantage à ce que l'extrémité supérieure de la pièce intermédiaire haute 9 soit disposée à une hauteur supérieure ou égale à la hauteur montrée par le sommet de la jante 3 de la roue avant 1 par rapport au sol. Il va sans dire que la roue considérée se situe du même côté du véhicule. En variante, l'extrémité supérieure de la pièce intermédiaire haute 9 est disposée à une hauteur comprise entre le centre et le sommet de la jante de la roue avant par rapport au sol. Idéalement, ladite pièce intermédiaire haute 9 est inclinée selon un angle compris entre 10° et 80° avec l'horizontale, ledit angle étant ouvert en direction de l'avant du véhicule, de préférence entre 20° et 70°, plus préférentiellement entre 30° et 60° ou encore entre 40° et 50°.

Selon un mode de réalisation préféré de l'invention, le véhicule comprend en outre une traverse avant 11 s'étendant selon la direction transversale du véhicule. Le véhicule est alors remarquable en ce qu'il comprend en outre une pièce intermédiaire basse 13 montrant deux extrémités et en ce qu'une de ses extrémités est fixée à l'extrémité avant d'un longeron latéral 7 et une de ses extrémités est fixée à ladite traverse avant 11. De manière préférentielle et dans l'exemple de réalisation représenté en figure 1, la pièce intermédiaire basse 13 est inclinée de manière à ce que son extrémité fixée au longeron latéral 7 soit disposée supérieure à son extrémité fixée à la traverse avant 11.

La traverse avant 11 est avantageusement disposée à la verticale du pied avant 5 comme illustré en figure 1. L'homme du métier pourra néanmoins envisager de disposer la traverse avant en avant de l'extrémité inférieure du pied avant selon la direction longitudinale du véhicule ou en arrière de ladite extrémité inférieure du pied avant. La présence conjointe d'une pièce intermédiaire haute 9 et d'une pièce intermédiaire basse 13 donne à l'ensemble formé par le longeron latéral 7 et les deux pièces intermédiaires haute 9 et basse 13 une forme en Y couché, ouvert en direction de la roue avant. On comprend bien qu'une telle structure permet d'absorber au plus vite les efforts reçus lors d'une collision frontale, par déformation des pièces intermédiaires haute 9 et basse 13 tout en sollicitant plus tard l'extrémité avant du longeron latéral 7 puisque celle-ci est décalée vers l'arrière par rapport aux structures plus classiques en L. Un autre avantage est que la traverse avant 11 peut être fixée au longeron latéral 7 sans être à la même hauteur que lui. Ainsi, selon un mode de réalisation préféré de l'invention, la traverse avant 11 est disposée inférieure au longeron latéral 7, c'est-à-dire qu'elle présente une proximité avec le sol plus importante selon la direction verticale que le longeron latéral 7. La traverse avant 11 est disposée en avant de l'extrémité avant du longeron latéral 7.

La pièce intermédiaire basse 13 peut montrer les mêmes caractéristiques que la pièce intermédiaire haute 9 ou des caractéristiques différentes. Ainsi, la pièce intermédiaire basse 13 peut être une pièce ajoutée, une extension de la traverse avant 11 ou une extension du longeron latéral 7.

Lorsque les deux pièces intermédiaires basse 13 et haute 9 sont des extensions du longeron latéral 7, ce dernier présente une extrémité avant montrant une forme en Y ouverte en direction de l'avant du véhicule.

Dans le cas (représenté en figure 1) où la pièce intermédiaire basse 13 est une pièce ajoutée, celle-ci peut être réalisée dans le même acier ou dans une nuance d'acier différente de l'acier dont est constitué le longeron latéral 7 ou la traverse avant 11. Par exemple, la pièce intermédiaire basse 13 peut être réalisée en acier à ultra haute limite élastique présentant, après emboutissage à chaud, une résistance mécanique Rm d'au moins 1200 MPa telle que mesurée selon la norme ISO 6892-1:2016 et un allongement à la rupture d'au moins 3 % telle que mesurée selon la norme ISO 6892-1:2016. Dans un autre exemple, elle est réalisée dans un acier présentant une résistance mécanique Rm comprise entre 300 et 1150 MPa, la résistance mécanique étant mesurée selon la norme ISO 6892-1:2016. Les mêmes considérations concernant son épaisseur peuvent être appliquées. Selon un mode de réalisation, elle est réalisée dans une tôle montrant une épaisseur supérieure à la l'épaisseur de la tôle dont est formée le longeron latéral 7 ; par exemple, au moins 1,1 fois son épaisseur, ou encore au moins 1,5 fois son épaisseur.

La pièce intermédiaire basse 13 est avantageusement un profilé, par exemple un embouti. Selon une mise en œuvre de l'invention, la pièce intermédiaire basse 13 est un profilé se présentant sous la forme d'une demi-coque définissant une cavité, la cavité montrant un fond et des parois latérales. De préférence, la cavité de la pièce intermédiaire basse 13 est au moins en partie bordée par des feuillures d'assemblage. Lorsqu'elle n'en constitue pas une extension, la pièce intermédiaire basse 13 est fixée à la traverse avant 11 et/ou à l'extrémité avant du longeron latéral 7 par tout moyen, comme par exemple par rivetage ou par soudage.

Lorsque les pièces intermédiaires haute 9 et basse 13 sont toutes les deux fixées par soudage au niveau de l'extrémité avant du longeron latéral 7, de manière à superposer leurs cavités respectives au niveau d'une zone de fixation 15, l'homme du métier aura avantage à privilégier une fixation par soudage au niveau du fond leur cavités et/ou au niveau des parois latérales de leur cavité. De manière préférentielle, l'extrémité de la pièce intermédiaire haute 9 et/ou de la pièce intermédiaire basse 13 dans sa partie superposée à l'extrémité du longeron latéral 7 est dépourvue de feuillures d'assemblage. Cette configuration permet d'éviter une superposition d'un nombre de feuillures d'assemblage trop important, par exemple supérieur à trois, au niveau de la zone de fixation 15.

De manière optionnelle, la pièce intermédiaire basse 13 est oblique de manière à ce que son extrémité fixée au longeron latéral 7 et son extrémité fixée à la traverse avant 11 soient décalées l'une par rapport à l'autre selon l'axe transversal du véhicule. Par exemple, la distance entre l'axe médian longitudinal du véhicule et l'extrémité de la pièce intermédiaire basse 13 fixée au longeron latéral 7 est supérieure à la distance entre l'axe médian longitudinal du véhicule et l'extrémité de la pièce intermédiaire basse 13 fixée à la traverse avant 11. L'inverse est également possible, la distance entre l'axe médian longitudinal du véhicule et l'extrémité de la pièce intermédiaire basse 13 fixée au longeron latéral 7 est supérieure à la distance entre l'axe médian longitudinal du véhicule et l'extrémité de la pièce intermédiaire basse 13 fixée à la traverse avant 11. L'homme du métier pourra également considérer des structures dans lesquelles la distance entre l'axe médian longitudinal du véhicule et l'extrémité de la pièce intermédiaire basse 13 fixée au longeron latéral 7 est égale à la distance entre l'axe médian longitudinal du véhicule et l'extrémité de la pièce intermédiaire basse 13 fixée à la traverse avant 11.

Selon une mise en œuvre de l'invention, l'extrémité inférieure de la pièce intermédiaire basse 13 est disposée à une hauteur inférieure ou égale à la hauteur montrée par le centre de la jante 3 de la roue avant 1 par rapport au sol. Idéalement, ladite pièce intermédiaire basse est inclinée selon un angle compris entre 100 et 170° avec l'horizontale, ledit angle étant ouvert en direction de l'avant du véhicule ; de préférence entre 110° et 160°, plus préférentiellement entre 120° et 150°ou encore entre 130° et 140°.

## Revendications

1. Véhicule comprenant sur chacun de ses côtés latéraux, une roue avant (1) munie d'une jante (3), un pied avant (5) et un longeron latéral (7) montrant une extrémité avant, au moins un pied avant (5) est fixé à l'extrémité avant d'un longeron latéral (7) au moyen d'une pièce intermédiaire haute (9) montrant deux extrémités, ladite pièce intermédiaire haute (9) est inclinée de manière à ce que son extrémité fixée au longeron latéral (7) soit disposée inférieure à son extrémité fixée au pied avant (5), le véhicule comprenant en outre une traverse avant (11) s'étendant selon la direction transversale du véhicule et une pièce intermédiaire basse (13) montrant deux extrémités dont l'une des extrémités est fixée à l'extrémité avant du longeron latéral (7) et une de ses extrémités est fixée à ladite traverse avant (11), **caractérisé en ce que** la pièce intermédiaire basse (13) est inclinée de manière à ce que son extrémité fixée au longeron latéral (7) soit disposée supérieure à son extrémité fixée à la traverse avant (11)

2. Véhicule selon la revendication précédente, **caractérisé en ce que** la pièce intermédiaire basse (13) est oblique de manière à ce que son extrémité fixée au longeron latéral (7) et son extrémité fixée à la traverse avant (11) soient décalées l'une par rapport à l'autre selon l'axe transversal du véhicule ; de préférence, la distance entre l'axe médian longitudinal du véhicule et l'extrémité de la pièce intermédiaire basse (13) fixée au longeron latéral (7) est supérieure à la distance entre l'axe médian longitudinal du véhicule et l'extrémité de la pièce intermédiaire basse (13) fixée à la traverse avant (11).

3. Véhicule selon l'une des revendications précédentes, **caractérisé en ce que** la pièce intermédiaire haute (9) est oblique de manière à ce que son extrémité fixée au longeron latéral (7) et son extrémité fixée au pied avant (5) soient décalées l'une par rapport à l'autre selon l'axe transversal du véhicule ; de préférence, la distance entre l'axe médian longitudinal du véhicule et l'extrémité de la pièce intermédiaire haute (9) fixée au pied avant (5) est supérieure à la distance entre l'axe médian longitudinal du véhicule et l'extrémité de la pièce intermédiaire haute (9) fixée au longeron latéral (7).

4. Véhicule selon l'une des revendications précédentes, **caractérisé en ce que** la pièce intermédiaire haute (9) est un profilé se présentant sous la forme d'une demi-coque définissant une cavité ; de préférence, la cavité de la pièce intermédiaire haute (9) est au moins en partie bordée par des feuillures d'assemblage.

5. Véhicule selon l'une des revendications précédentes, le pied avant (5) étant en acier, le véhicule est **caractérisé en ce que** la pièce intermédiaire haute (9) est venue de matière avec le pied avant (5) ; ou **en ce que** la pièce intermédiaire haute (9) est en un acier montrant une nuance différente de la nuance d'acier du pied avant (5).

6. Véhicule selon l'une des revendications précédentes, **caractérisé en ce que** l'extrémité supérieure de la pièce intermédiaire haute (9) est disposée à une hauteur supérieure ou égale à la hauteur montrée par le sommet de la jante (3) de la roue avant (1) par rapport au sol, ou à une hauteur comprise entre le centre et le sommet de la jante (3) de la roue avant (1) par rapport au sol.

7. Véhicule selon l'une des revendications précédentes, caractérisé en ce ladite pièce intermédiaire haute (9) est inclinée selon un angle compris entre 30° et 60° avec l'horizontale, ledit angle étant ouvert en direction de l'avant du véhicule ; et/ou en ce que la pièce intermédiaire haute (9) est fixée à l'extrémité avant du longeron latéral (7) par soudage.

8. Véhicule selon l'une des revendications précédentes, le véhicule comprenant en outre une traverse avant (11) s'étendant selon la direction transversale du véhicule, la traverse avant étant en acier, le véhicule est **caractérisé en ce qu'**il comprend en outre une pièce intermédiaire basse (13) montrant deux extrémités et **en ce que** la pièce intermédiaire basse (13) est en un acier montrant une nuance différente de la nuance d'acier de la traverse avant (11) ; et/ou **en ce que** l'extrémité inferieure de la pièce intermédiaire basse (13) est disposée à une hauteur inférieure ou égale à la hauteur montrée par le centre de la jante (3) de la roue avant (1) par rapport au sol ; et/ou **en ce que** ladite pièce intermédiaire basse (13) est inclinée selon un angle compris entre 120° et 150° avec l'horizontale, ledit angle étant ouvert en direction de l'avant du véhicule ; et/ou **en ce que** la pièce intermédiaire basse (13) est fixée à l'extrémité avant du longeron latéral (7) par soudage ; et/ou **en ce que** la pièce intermédiaire basse (13) est un profilé se présentant sous la forme d'une demi-coque définissant une cavité ; de préférence, la cavité de la pièce intermédiaire basse (13) est au moins en partie bordée par des feuillures d'assemblage.

9. Véhicule selon l'une des revendications précédentes, **caractérisée en ce qu'**il comprend en outre une pièce intermédiaire basse (13) montrant deux extrémités et **en ce qu'**une extrémité de la pièce intermédiaire haute (9), une extrémité de la pièce intermédiaire basse (13) et l'extrémité avant du longeron latéral (7) se superposent au niveau de leur zone de fixation (15) ; de préférence, l'extrémité de la pièce intermédiaire haute (9) et/ou de la pièce intermédiaire basse superposée à l'extrémité du longeron latéral (7) est dépourvue de feuillures d'assemblage.

## Patentansprüche

1. Fahrzeug, das an jeder seiner Seitenseiten ein Vorderrad (1) mit einer Felge (3), einen Vorderfuß (5) und einen Seitenholm (7) mit einem vorderen Ende aufweist, wobei mindestens ein Vorderfuß (5) an dem vorderen Ende eines Seitenholms (7) mittels eines oberen Zwischenstücks (9) befestigt ist, das zwei Enden aufweist, wobei das obere Zwischenstück (9) so geneigt ist, dass sein am Seitenholm (7) befestigtes Ende kleiner als sein am Vorderfuß (5) befestigtes Ende angeordnet ist, wobei das Fahrzeug ferner eine vordere Quertraverse (11) aufweist, die sich in der Richtung erstreckt Fahrzeugquerträger und ein unteres Zwischenteil (13), das zwei Enden aufweist, von denen ein Ende am vorderen Ende des Seitenholms (7) befestigt ist und ein Ende an dem vorderen Querträger (11) befestigt ist, **dadurch gekennzeichnet, dass** das untere Zwischenteil (13) derart geneigt ist, dass sein am Seitenholm (7) befestigtes Ende größer als sein am vorderen Querträger (11) befestigtes Ende angeordnet ist

2. Fahrzeug nach dem vorhergehenden Anspruch, **dadurch gekennzeichnet, dass** das untere Zwischenstück (13) derart schräg ist, dass sein am Seitenträger (7) befestigtes Ende und sein am vorderen Querträger (11) befestigtes Ende in Bezug auf die Querachse des Fahrzeugs versetzt sind; vorzugsweise ist der Abstand zwischen der Längsmittelachse des Fahrzeugs und dem am Seitenträger (7) befestigten Ende des unteren Zwischenstücks (13) größer als der Abstand zwischen der Längsmittelachse des Fahrzeugs und dem am vorderen Querträger (11) befestigten Ende des unteren Zwischenstücks (13).

3. Fahrzeug nach einem der vorhergehenden Ansprüche, **dadurch gekennzeichnet, dass** das obere Zwischenstück (9) derart schräg ist, dass sein am Seitenträger (7) befestigtes Ende und sein am Vorderfuß (5) befestigtes Ende entsprechend der Querachse des Fahrzeugs gegeneinander versetzt sind; vorzugsweise ist der Abstand zwischen der Längsmittelachse des Fahrzeugs und dem am Vorderfuß (5) befestigten Ende des oberen Zwischenstücks (9) größer als der Abstand zwischen der Längsmittelachse des Fahrzeugs und dem am Seitenträger (7) befestigten Ende des oberen Zwischenstücks (9).

4. Fahrzeug nach einem der vorhergehenden Ansprüche, **dadurch gekennzeichnet, dass** das obere Zwischenstück (9) ein Profil in Form einer einen Hohlraum definierenden Halbschale ist; vorzugsweise ist der Hohlraum des oberen Zwischenstücks (9) zumindest teilweise von Verbindungsblättern umgeben.

5. Fahrzeug nach einem der vorhergehenden Ansprüche, wobei der Vorderfuß (5) aus Stahl besteht, **dadurch gekennzeichnet, dass** das obere Zwischenstück (9) einstückig mit dem Vorderfuß (5) ausgebildet ist; oder dass das obere Zwischenstück (9) aus einem Stahl besteht, der eine andere Schattierung als die Stahlschattierung des Vorderfußes (5) aufweist.

6. Fahrzeug nach einem der vorhergehenden Ansprüche, **dadurch gekennzeichnet, dass** das obere Ende des oberen Zwischenstücks (9) in einer Höhe angeordnet ist, die größer oder gleich der Höhe ist, die vom Scheitel der Felge (3) des Vorderrades (1) in Bezug auf den Boden gezeigt wird, oder in einer Höhe, die zwischen der Mitte und dem Scheitel der Felge (3) des Vorderrades (1) in Bezug auf den Boden liegt.

7. Fahrzeug nach einem der vorhergehenden Ansprüche, **dadurch gekennzeichnet, dass** das obere Zwischenstück (9) in einem Winkel zwischen 30° und 60° zur Horizontalen geneigt ist, wobei der Winkel in Richtung der Vorderseite des Fahrzeugs offen ist; und/oder dass das obere Zwischenstück (9) am vorderen Ende des Seitenholms (7) durch Schweißen befestigt ist.

8. Fahrzeug nach einem der vorhergehenden Ansprüche, wobei das Fahrzeug ferner einen vorderen Querträger (11) aufweist, der sich in der Querrichtung des Fahrzeugs erstreckt, wobei der vordere Querträger aus Stahl besteht, wobei das Fahrzeug ferner **dadurch gekennzeichnet ist, dass** es ein unteres Zwischenstück (13) aufweist, das zwei Enden aufweist, und dass das untere Zwischenstück (13) aus Stahl besteht, das eine andere Schattierung als die Stahlschattierung des vorderen Querträgers (11) aufweist, und/oder dass das untere Ende des unteren Zwischenstücks (13) in einer Höhe angeordnet ist, die kleiner oder gleich der Höhe ist, die durch die Mitte der Felge angezeigt wird (3) des Vorderrades (1) in Bezug auf den Boden; und/oder dass das untere Zwischenteil (13) in einem Winkel zwischen 120° und 150° zur Horizontalen geneigt ist, wobei der Winkel in Richtung der Fahrzeugfront offen ist; und/oder dass das untere Zwischenteil (13) am vorderen Ende des Seitenholms (7) durch Schweißen befestigt ist; und/oder dass das untere Zwischenteil (13) ein Profil in Form einer Halbschale ist, die einen Hohlraum definiert; vorzugsweise der Hohlraum des unteren Zwischenteils (13) zumindest teilweise mit Verbundblättern eingefasst ist.

9. Fahrzeug nach einem der vorhergehenden Ansprüche, **dadurch gekennzeichnet, dass** es außerdem ein unteres Zwischenteil (13) aufweist, das zwei Enden aufweist, und dass ein Ende des oberen Zwischenteils (9), ein Ende des unteren Zwischenteils (13) und das vordere Ende des Seitenholms (7) sich in Höhe ihrer Befestigungszone (15) überlappen; vorzugsweise ist das Ende des oberen Zwischenteils (9) und/oder des unteren Zwischenteils, das dem Ende des Seitenholms (7) überlagert ist, frei von Verbindungsblättern.

## Claims

1. Vehicle comprising on each of its lateral sides, a front wheel (1) provided with a rim (3), a front leg (5) and a lateral spar (7) showing a front end, at least one front leg (5) is fixed to the front end of a lateral spar (7) by means of an upper intermediate component (9) showing two ends, the said upper intermediate component (9) is inclined so that its end fixed to the lateral spar (7) is arranged lower than its end fixed to the front leg (5), the vehicle further comprising a front crossmember (11) extending according to the transverse management of the vehicle and a lower intermediate component (13) showing two ends, one of the ends of which is fixed to the front end of the lateral spar (7) and one of its ends is fixed to the said front crosspiece (11), wherein the lower intermediate component (13) is inclined so that its end fixed to the lateral spar (7) is arranged above its end fixed to the front crosspiece (11)

2. Vehicle according to the previous claim, wherein the lower intermediate component (13) is oblique so that its end fixed to the lateral spar (7) and its end fixed to the front crosspiece (11) are offset from one another in report along the transverse axis of the vehicle; preferably, the distance between the longitudinal median axis of the vehicle and the end of the lower intermediate component (13) fixed to the lateral spar (7) is greater than the distance between the longitudinal median axis of the vehicle and the end of the lower intermediate component (13) fixed to the front crosspiece (11)

3. Vehicle according to one of the previous claims, wherein the upper intermediate component (9) is oblique so that its end fixed to the lateral spar (7) and its end fixed to the front foot (5) are offset from one another in report along the transverse axis of the vehicle; preferably, the distance between the longitudinal median axis of the vehicle and the end of the upper intermediate component (9) fixed to the front foot (5) is greater than the distance between the longitudinal median axis of the vehicle and the end of the upper intermediate component (9) fixed to the lateral spar (7).

4. Vehicle according to one of the previous claims, **characterised in that** the upper intermediate component (9) is a profile in the form of a half-shell defining a cavity; preferably, the cavity of the upper intermediate component (9) is at least partly bordered by assembly rabbets.

5. Vehicle according to one of the previous claims, the front leg (5) being made of steel, the vehicle is **characterised in that** the upper intermediate component (9) is integrally formed with the front leg (5); or **in that** the upper intermediate component (9) is made of steel showing a grade different from the steel grade of the front leg (5).

6. Vehicle according to one of the previous claims, **characterised in that** the upper end of the upper intermediate component (9) is disposed at a height greater than or equal to the height shown by the top of the rim (3) of the front wheel (1) by report to the ground, or at a height comprised between the compound and the top of the rim (3) of the front wheel (1) by report to the ground.

7. Vehicle according to one of the previous claims, **characterised in that** the said upper intermediate component (9) is inclined at an angle of between 30° and 60° with the horizontal, the said angle being open at the management of the front of the vehicle; and/or **in that** the upper intermediate component (9) is fixed to the front end of the lateral spar (7) by welding.

8. Vehicle according to one of the previous claims, the vehicle further comprising a front crossmember (11) extending along the transverse management of the vehicle, the front crossmember being made of steel, the vehicle being **characterised in that** it further comprises a lower intermediate component (13) showing two ends and **in that** the lower intermediate component (13) is made of steel showing a grade different from the steel grade of the front crossmember (11); and/or **in that** the lower end of the lower intermediate component (13) is arranged at a height less than or equal to the height shown by the compound of the rim (3) of the front wheel (1) by report to the ground; and/or **in that** said lower intermediate component (13) is inclined at an angle of between 120° and 150° with the horizontal, said angle being open at the management of the front of the vehicle; and/or **in that** the lower intermediate component (13) is fixed to the front end of the lateral spar (7) by welding; and/or **in that** the lower intermediate component (13) is a profile in the form of a half-shell defining a cavity; preferably, the cavity of the lower intermediate component (13) is at least partly bordered by assembly rabbets.

9. Vehicle according to one of the previous claims, **characterised in that** it further comprises a lower intermediate component (13) showing two ends and **in that** one end of the upper intermediate component (9), one end of the lower intermediate component (13) and the front end of the lateral spar (7) are superimposed on the level of their fixing zone (15); preferably, the end of the upper intermediate component (9) and/or of the lower intermediate component superimposed on the end of the lateral spar (7) is free of assembly rabbeads.
